(19) Europäisches Patentamt
European Patent Office
Office européen des brevets

(11) **EP 2 492 640 B1**

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(21) Anmeldenummer: **12152637.0**

(22) Anmeldetag: **26.01.2012**

(51) Int Cl.:
*G01D 3/036* (2006.01)   *G01D 5/20* (2006.01)

(54) **Induktive Wegmesseinrichtung**

Inductive displacement sensor

Dispositif inductif de mesure de déplacement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2011 DE 202011000401 U**

(43) Veröffentlichungstag der Anmeldung:
**29.08.2012 Patentblatt 2012/35**

(73) Patentinhaber: **Rollax GmbH & Co. Kg**
**32107 Bad Salzuflen (DE)**

(72) Erfinder: **Ralf, Mönkemöller**
**33615 Bielefeld (DE)**

(74) Vertreter: **Ter Meer Steinmeister & Partner Patentanwälte mbB**
**Artur-Ladebeck-Strasse 51**
**33617 Bielefeld (DE)**

(56) Entgegenhaltungen:
**DE-A1- 2 359 873        DE-A1- 19 500 982**
**DE-A1-102005 062 906    US-A- 4 667 158**

**Beschreibung**

Die Erfindung betrifft eine induktive Wegmesseinrichtung mit einer Messspule, einem relativ zu der Messspule beweglichen Messstößel, und einer Messschaltung zur Messung der vom Weg des Messstößels abhängigen Induktivität der Messspule und der Kompensationsspule.

Insbesondere befasst sich die Erfindung mit einer Wegmesseinrichtung in einem Getriebesensor eines Kraftfahrzeugs.

Eine Wegmesseinrichtung mit einer Messspule und einem beweglichen Messstößel ist aus US 4 667 158 A bekannt.

In WO 2010/006781 A1 wird ein Getriebesensor beschrieben, der dazu dient, die aktuelle Schaltposition des Getriebes zu erfassen. Bei diesem Sensor ist der Messstößel mechanisch mit einem Rastglied verbunden, das elastisch gegen eine Schaltwelle des Getriebes vorgespannt ist und ein auf dieser Schaltwelle gebildetes Schaltgebirge abfährt. Die Bewegungen der Schaltwelle werden so in axiale Bewegungen des Messstößels umgesetzt, die mit der Messeinrichtung erfasst werden. Anhand des so gemessenen Weges des Messstößels kann dann beispielsweise erkannt werden, ob sich das Schaltgetriebe in einer Neutralposition, im Rückwärtsgang oder in einem Vorwärtsgang befindet, da diesen Getriebepositionen jeweils unterschiedlichen Höhen des Schaltgebirges zugeordnet sind.

Bei einer induktiven Wegmesseinrichtung hat der Messstößel eine relativ hohe Permeabilität, und folglich hängt die Induktivität der Messspule kritisch davon ab, wie tief der Messstößel in die Messspule eintaucht. Der vom Messstößel zurückgelegte Weg kann daher durch Messung der Induktivität bestimmt werden.

Wenn eine solche Wegmesseinrichtung in einem Kraftfahrzeug eingesetzt wird, kann sie jedoch Magnetfeldern ausgesetzt sein, die an anderer Stelle im Fahrzeug erzeugt werden. Wenn diese externen Magnetfelder nicht ausreichend abgeschirmt werden, was sich unter den beengten Einbaubedingungen in einem Fahrzeuggetriebe als aufwendig und schwierig erweisen kann, so besteht die Gefahr, dass durch die externen Magnetfelder in der Messspule Spannungen induziert werden, die dann das Ergebnis verfälschen.

In DE 103 20 716 A1, DE 23 59 873 A1 und DE 10 2005 062906 A1 werden Messeinrichtungen beschrieben, bei denen solche Störeffekte durch eine Kompensationsspule unterdrückt werden. In DE 23 59 873 A1 ist die Kompensationsspule auf der Messspule angeordnet. Da das extern erzeugte Magnetfeld als im wesentlichen homogen betrachtet werden kann, wird die durch dieses Magnetfeld in der Messspule induzierte Spannung durch eine dem Betrage nach gleiche, jedoch gegenpolige Spannung ausgeglichen, die in der Kompensationsspule induziert wird.

Aufgabe der Erfindung ist es, die Messgenauigkeit der induktiven Messeinrichtung zu verbessern.

Diese Aufgabe wird erfindungsgemäß dadurch gelöst, dass zur Kompensation von Störspannungen, die durch externe Magnetfelder in der Messspule induziert werden, eine koaxial zu der Messspule angeordnete und mit dieser in Reihe geschalteten Kompensationsspule vorgesehen ist, die in Abstand zu der Messspule angeordnet ist und weiter von dem Messstößel entfernt ist als die Messspule und die eine größere Fläche umschließt als die Messspule und ein kleinere Windungszahl hat als diese, und dass die Messschaltung eine elektronische Auswerte- und Steuereinheit zur Berechnung des vom Messstößel zurückgelegten Weges in Abhängigkeit von der gemessenen Induktivität aufweist.

Die Spannung, die durch ein homogenes, zeitlich veränderliches Magnetfeld in einer Spule induziert wird, ist proportional zu der von der Spule umschlossenen Fläche und zu der Windungszahl. Wenn die Fläche der Kompensationsspule vergrößert wird und gleichzeitig die Windungszahl verkleinert wird, kann somit der kompensierende Effekt dieser Spule beibehalten werden. Der wesentliche Vorteil dieser Maßnahme besteht darin, dass die Induktivität der Kompensationsspule kleiner wird, da die Induktivität proportional zum Quadrat der Windungszahl ist. Das Prinzip der Wegmessung beruht darauf, dass Änderungen der Induktivität der Messspule bzw. der Induktivität des gesamten Spulensystems erfasst werden. Da die Induktivität der Kompensationsspule jedoch nicht oder kaum von der Bewegung des Messstößels beeinflusst wird, trägt sie nicht zur Steigerung der Empfindlichkeit des Messsystems sondern nur zur Erhöhung der Gesamtinduktivität des Systems bei. Die Messgenauigkeit ist deshalb höher, wenn die Induktivität der Kompensationsspule im Vergleich zur Induktivität der Messspule möglichst klein ist. Das wird durch die erfindungsgemäße Maßnahme erreicht.

In den Unteransprüchen sind vorteilhafte Ausgestaltungen und Weiterbildungen angegeben, die eine weitere Verbesserung der Messgenauigkeit ermöglichen.

In einer bevorzugten Ausführungsform ist die Messspule eng von einer Hülse aus einem Material mit hoher magnetischer Permeabilität, beispielsweise einem ferromagnetischen Material umschlossen. Durch diese Hülse wird das ursprünglich homogene externe Magnetfeld in günstiger Weise verzerrt. Zum einen wird die Messspule durch diese Hülse im gewissen Ausmaß abgeschirmt, so dass die in der Messspule induzierten Spannungen kleiner werden. Da die Kompensationsspule eine größere Fläche umschließt und folglich einen größeren Radius hat als die Messspule, liegen die Wicklungen der Kompensationsspule vorwiegend außerhalb des Radius der Hülse, mit dem Ergebnis, dass das externe Magnetfeld durch die Hülse in die Kompensationsspule hinein konzentriert wird, so dass in der Kompensationsspule entsprechend höhere Spannungen induziert werden. Damit sich die induzierten Spannungen weiterhin ausgleichen, kann und muss folglich die Windungszahl der Kompensationsspule überproportional reduziert werden, was zu einer weiteren Abnahme der Induktivität dieser Kompensationsspule führt.

Im folgenden wird ein Ausführungsbeispiel der Erfindung anhand der Zeichnung näher erläutert.

Es zeigen:

Fig. 1 einen axialen Schnitt durch eine Spulenanordnung einer induktiven Wegmesseinrichtung gemäß der Erfindung;

Fig. 2 ein Schaltbild der Wegmesseinrichtung;

Fig. 3 eine Skizze zur Erläuterung des Effekts einer magnetischen Abschirmung, und

Fig. 4 einen Getriebesensor mit einer erfindungsgemäßen Wegmesseinrichtung.

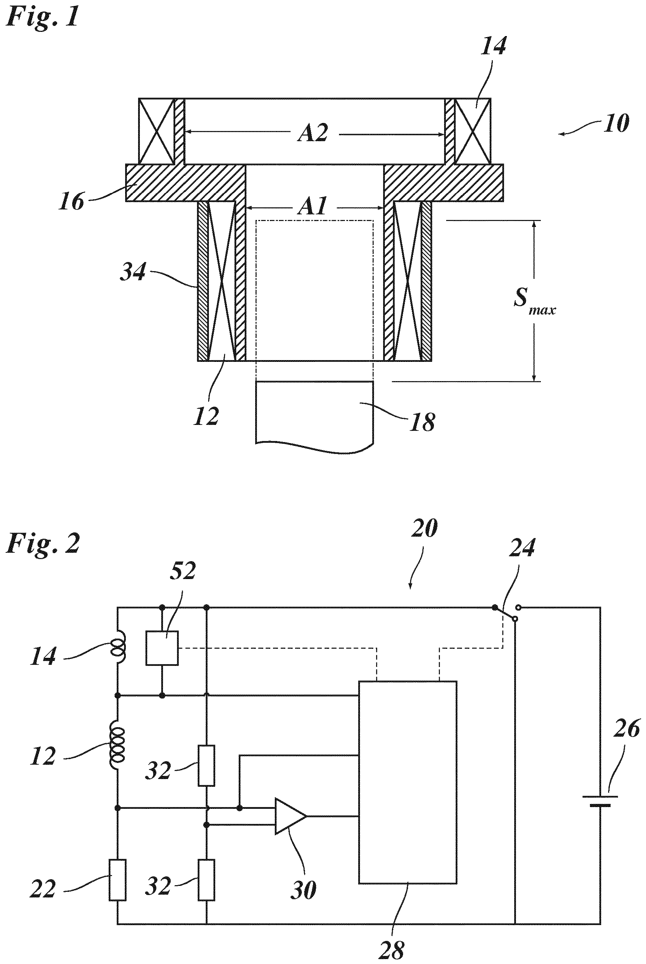

Fig. 1 zeigt eine Spulenanordnung 10 mit einer zylindrischen Messspule 12, im gezeigten Beispiel einer Luftspule, und einer gleichfalls zylindrischen Kompensationsspule 14. Die Messspule 12 und die Kompensationsspule 14 sind koaxial und in gewissem Abstand zueinander auf einen gemeinsamen Träger 16 aus nichtmagnetischem Material gewickelt. Am der Kompensationsspule 14 entgegengesetzten Ende der Messspule 12 ist ein Ende eines ferromagnetischen Messstößels 18 gezeigt, der in Axialrichtung der Spulenanordnung beweglich ist und so eine gewisse Strecke $S_{max}$ in die Messspule 12 eintauchen kann, wie in Fig. 1 strichpunktiert angedeutet ist. Der Messstößel 18 beeinflusst die Induktivität der Messspule 12, so dass durch Messung dieser Induktivität der Weg gemessen werden kann, um den sich der Messstößel 18 aus der in Fig. 1 in durchgezogenen Linien gezeigten Ausgangsstellung heraus in die Messspule hinein bewegt hat.

Die Messspule 12 umschließt eine gewisse kreisförmige Fläche A1. Die Wicklungen der Kompensationsspule 14 liegen radial außerhalb der Wicklungen der Messspule 12 und umschließen daher eine größere Fläche A2. Andererseits hat die Kompensationsspule 14 eine kleinere Windungszahl als die Messspule 12. Im gezeigten Beispiel hat die Kompensationsspule 14 auch eine geringere Länge. Es ist jedoch vorteilhaft, wenn die Kompensationsspule 14 aus einem Draht gewickelt ist, der einen größeren Querschnitt hat als der Draht, der für die Messspule 12 verwendet wird, denn dadurch reduziert sich der Ohmsche Widerstand der Kompensationsspule 14.

Die Flächen A1 und A2 und die Windungszahlen der beiden Spulen sind so aufeinander abgestimmt, dass, wenn sich die Spulenanordnung 10 in einem zeitlich veränderlichen homogenen Magnetfeld befindet, die Spannungen, die einerseits in der Messspule 12 und andererseits in der Kompensationsspule 14 induziert werden, dem Betrage nach gleich sind.

Die Messspule 12 und die Kompensationsspule 14 sind in Reihe geschaltet und so gewickelt, dass sich die induzierten Spannungen gegenseitig aufheben. Auf diese Weise wird bei nicht vorhandener oder unvollkommener magnetischer Abschirmung der Messanordnung eine weitgehende Unempfindlichkeit gegenüber externen Magnetfeldern erreicht.

Aufgrund des axialen Abstands zwischen der Messspule 12 und der Kompensationsspule 14 sind diese beiden Spulen magnetisch entkoppelt, so dass sich ihre Induktivitäten nicht auslöschen, sondern im wesentlichen addieren. In jedem Fall ist bei der hier gezeigten Anordnung die Induktivität der Kompensationsspule 14 sehr klein im Vergleich zur Induktivität der Messspule 12. Außerdem wird so die Induktivität der Messspule 12 kaum von den Bewegungen des Messstößels 18 beeinflusst eine vollständige magnetische Entkopplung der beiden Spulen ist daher zwar vorteilhaft aber nicht zwingend.

Fig. 2 zeigt eine Messschaltung 20, mit der die Gesamtinduktivität der durch die Messspule 12 und die Kompensationsspule 14 gebildeten Spulenanordnung gemessen wird. Ein Widerstand 22 ist in Reihe mit der Messspule 12 und der Kompensationsspule 14 geschaltet, und mit Hilfe eines elektronisch gesteuerten Schalters 24 kann an diese Reihenschaltung eine Spannung einer Gleichspannungsquelle 26 angelegt werden. Aufgrund der Induktivität der Spulen fällt diese Spannung im Einschaltzeitpunkt ausschließlich über den beiden Spulen ab. Der Stromfluss durch die Spulen nimmt dann allmählich zu, bis er schließlich einen Sättigungswert erreicht. Dieser Stromfluss führt zu einem Spannungsabfall über dem Widerstand 22. Die Spannung wird an einem Punkt zwischen dem Widerstand 22 und der Messspule 12 abgegriffen und einer elektronischen Auswerte- und Steuereinheit 28 zugeführt. Dort kann die Spannung digitalisiert und weiter ausgewertet und/oder gespeichert werden. Insbesondere lässt sich so feststellen, ob und wann der Strom seinen konstanten Sättigungswert erreicht hat, der von den Ohmschen Widerständen der Spulen 12, 14 und des Widerstands 22 und dem Innenwiderstand der Spannungsquelle 26 abhängig ist.

Wenn dieser Sättigungszustand erreicht ist, veranlasst die Auswerte- und Steuereinheit 28 das Umlegen des Schalters 24. Dadurch werden die Spulen von der Gleichspannungsquelle 26 getrennt und kurzgeschlossen. Aufgrund der Induktivität der Spulen fließt weiterhin ein Strom, der exponentiell mit einer von der Gesamtinduktivität abhängigen Zeitkonstanten auf null abnimmt. Gleichzeitig mit dem Umlegen des Schalters 24 beginnt die Auswerte- und Steuereinheit 28 mit einer Zeitzählung. Der für den Strom durch die Spulen repräsentative Spannungsabfall am Widerstand 22 wird in einem Vergleicher 30 mit einem festen Spannungswert verglichen, der mit einem durch Widerstände 32 gebildeten Spannungsteiler eingestellt wird. Sobald der Spannungsabfall am Widerstand 22 auf den Vergleichswert abgenommen hat, liefert der Vergleicher 30 an die Auswerte- und Steuereinheit 28 ein Signal, durch das die Zeitzählung beendet wird. Aus der gemessenen Zeit lässt sich dann die Gesamtinduktivität der Spulen 12, 14 berechnen. Da der Zusammenhang zwischen dieser Gesamtinduktivität und dem vom Messstößel 18 zurückgelegten Weg bekannt ist, kann dann aus der Induktivität der Weg des Messstößels 18 berechnet werden. Danach kann ein neuer Messzyklus beginnen. In der Praxis können beispielsweise 100 Messzyklen pro Sekunde durchgeführt werden.

Die oben beschriebene Induktivitätsmessung ist mit einer unvermeidlichen Messungenauigkeit $\Delta L$ behaftet. Daraus ergibt sich eine entsprechende Messungenauigkeit $\Delta S$ für die Wegmessung.

Der Zusammenhang zwischen dem Weg S und der Induktivität L ist in erster Näherung durch die folgende Gleichung gegeben:

$$L = L_0 + a * S \qquad (1)$$

Darin ist a eine Konstante und $L_0$ die "Leerlaufinduktivität", also die Gesamtinduktivität der Spulen 12, 14 für den Fall, dass der Messstößel 18 am weitesten aus der Messspule 12 herausgezogen ist (S = 0). In der Praxis wird man die Anordnung so wählen, dass die Leerlaufinduktivität im wesentlichen gleich der Induktivität ist, die die beiden Spulen zusammen bei völliger Abwesenheit des Messstößels 18 hätten.

Für den Weg des Messstößels erhält man aus Gleichung (1):

$$S = (L - L_0) / a \qquad (2)$$

Für die Messungenauigkeit $\Delta S$ bei der Wegmessung erhält man:

$$\Delta S = (dS/dL) * \Delta L = \Delta L / a \qquad (3)$$

Aussagekräftiger für die Qualität der Messeinrichtung ist jedoch die relative Messungenauigkeit $\Delta S/S$. Hierfür erhält man:

$$\Delta S/S = \Delta L / (L-L_0) \qquad (4)$$

Aus Gleichung (4) sieht man, dass $L_0$ möglichst klein sein sollte, damit die relative Messungenauigkeit möglichst gering wird (insbesondere bei kleinen S).

$L_0$ setzt sich zusammen aus den Leerlaufinduktivitäten der beiden Spulen 12, 14. Die Leerlaufinduktivität der Messspule 12 kann nicht verringert werden, da diese Spule eine gewisse Induktivität haben muss, damit das Messverfahren überhaupt durchgeführt werden kann.

Durch die in Fig. 1 gezeigte Geometrie der Spulenanordnung wird jedoch erreicht, dass die Induktivität der Kompensationsspule 14 deutlich kleiner ist als die Leerlaufinduktivität der Messspule 12. Dementsprechend wird die Genauigkeit der Wegmessung verbessert.

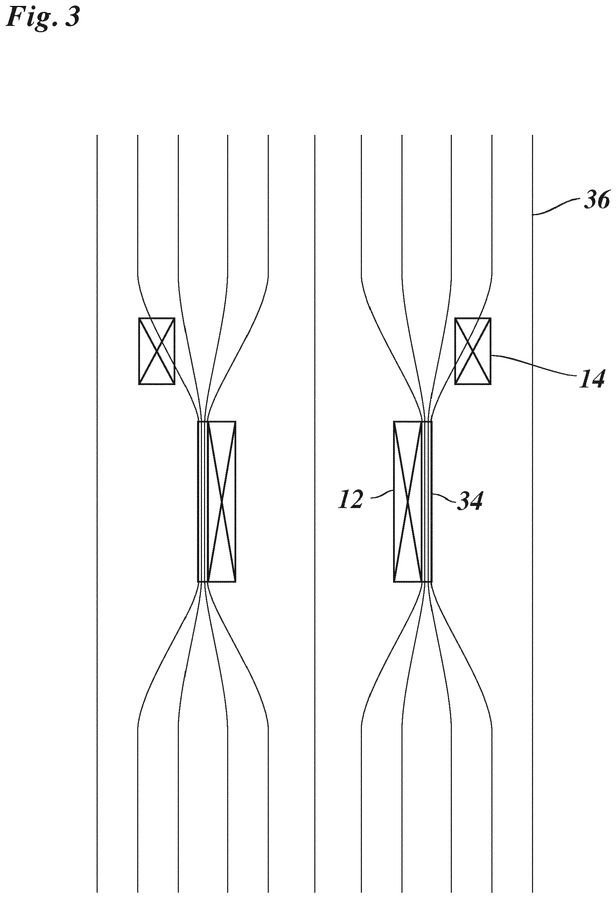

Eine weitere Verbesserung der Messgenauigkeit lässt sich dadurch erreichen, dass die Messspule 12 eng von einer ferromagnetischen Hülse 34 umschlossen wird, wie in Fig. 1 gezeigt ist. Durch diese Hülse 34 wird ein ursprünglich homogenes externes Magnetfeld, durch das eine störende Spannung in der Messspule 12 induziert werden könnte, so verzerrt, dass man diese Spannung mit einer Kompensationsspule 14 kompensieren kann, deren Induktivität noch weiter verringert ist. Dieser Effekt ist in Fig. 3 illustriert. Dort sind neben der Messspule 12, der Kompensationsspule 14 und der Hülse 34 Feldlinien 36 eines Magnetfelds gezeigt, das von einer weit entfernten Quelle erzeugt wurde und deshalb am Ort der Messeinrichtung eigentlich homogen wäre, wenn die Hülse 34 nicht vorhanden wäre. Da für die Induktion von Spannungen in der Messspule 12 und der Kompensationsspule 14 ohnehin nur die Komponente des Magnetfelds von Belang ist, die parallel zur Spulenachse verläuft, wird hier ohne Einschränkung der Allgemeinheit angenommen, dass das Magnetfeld parallel zu den Spulenachsen orientiert ist.

Man erkennt anhand des Verlaufs der Feldlinien 36, wie das Feld durch die Hülse 34 verzerrt wird. Diese Verzerrung bewirkt zum einen, dass der magnetische Fluss durch die Messspule 12 abnimmt. Entsprechend kleiner ist auch die Störspannung, die bei einer zeitlichen Änderung des Magnetfelds in dieser Spule induziert wird.

Der Außendurchmesser der Hülse 34 ist kleiner als der Innendurchmesser der Kompensationsspule 14. Die Verzerrung des Feldes bewirkt deshalb auch, dass das Magnetfeld gewissermaßen in die Kompensationsspule 14 hineingezogen wird, so dass sich der magnetische Fluss durch die Kompensationsspule erhöht. Entsprechend erhöht sich auch die Spannung, die in der Kompensationsspule induziert wird. Beide Effekte tragen dazu bei, dass man eine vollständige Kompensation der in der Messspule 12 induzierten Spannung mit einer Kompensationsspule 14 erreichen kann, bei der die Windungszahl und damit auch die Induktivität noch weiter verringert ist.

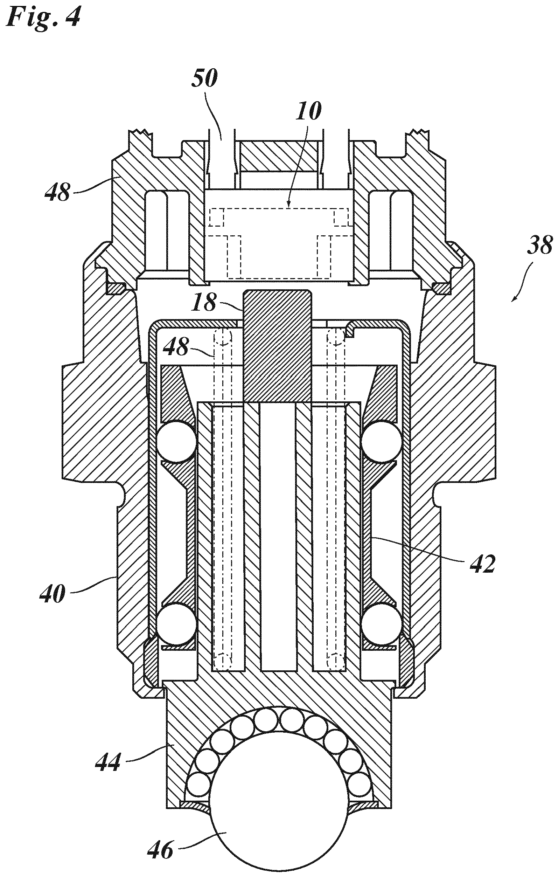

Eine mögliche Anwendung der erfindungsgemäßen Messeinrichtung ist in Fig. 4 illustriert. Dort ist in einem axialen Schnitt eine sogenannte Arretierschraube 38 aus Metall gezeigt, die mit einem Gewinde 40 in eine Wand eines nicht gezeigten Getriebegehäuses eingeschraubt wird und dazu dient, eine Schaltwelle des Getriebes in der jeweils gewählten Getriebeposition zu arretieren. Zu diesem Zweck ist mit Hilfe eines Kugellagers 42 ein Rastglied 44 axialbeweglich in der Arretierschraube gelagert. An seinem aus der Arretierschraube herausragenden Ende weist das Rastglied 44 eine reibungsarm gelagerte Rastkugel 46 auf, die ein Schaltgebirge der nicht gezeigten Schaltwelle abfährt. Durch eine Feder 48 wird das Rastglied gegen das Schaltgebirge vorgespannt. Wenn eine gewünschte Getriebeposition erreicht ist, rastet daher die Rastkugel 46 in einer entsprechenden Rastvertiefung der Schaltwelle ein.

An das entgegengesetzte Ende der Arretierschraube ist ein Gehäuse 48 aus Kunststoff angesetzt, dass eine induktive Messeinrichtung gemäß der Erfindung aufnimmt. Die Spulenanordnung 10 ist gestrichelt angedeutet. Die Messschaltung 20 ist ebenfalls in das Gehäuse 48 integriert, und das von ihr erzeugte Messsignal wird über Kontakte 50 nach außen geführt. Der Messstößel 18 ist am oberen Ende des Rastgliedes 44 befestigt.

Für die verschiedenen Schaltstellungen des Getriebes unterscheiden sich die erwähnten Rastvertiefungen in der Schaltwelle in ihrer Tiefe. Da die Tiefe dieser Vertiefungen die Position des Rastgliedes 44 und damit auch des Messstößels 18 bestimmt, die mit Hilfe der Messeinrichtung gemessen wird, lässt sich die gewählte Getriebeposition erkennen.

Wenn die Arretierschraube 38 mit dem Gewinde 40 in das Getriebegehäuse eingeschraubt ist, so liegt das Kunststoffgehäuse, das die Messeinrichtung aufnimmt, außerhalb des Getriebegehäuses. Die Messeinrichtung ist deshalb nicht vollständig gegenüber äußeren Magnetfeldern abgeschirmt. Wenn der Messstößel 18 in die Spulenanordnung 10 eintaucht, so ist auch dieser Messstößel nicht vollkommen gegen äußere Magnetfelder abgeschirmt. Da dieser Messstößel 18 aus ferromagnetischem Material besteht, kann er das äußere Feld ähnlich verzerren, wie dies in Fig. 3 für die Hülse 34 dargestellt ist. Der Effekt dieser Feldverzerrung durch den Messstößel 18 ist jedoch, dass das äußere Feld um so stärker in die Messspule 12 hineingezogen wird, je tiefer der Messstößel in diese Messspule eintaucht. Die Störspannung, die durch das externe Magnetfeld in die Messspule 12 induziert wird, ist daher streng genommen vom Weg des Messstößels 18 abhängig. Um eine vollständige Kompensation der Störspannung mit Hilfe der Kompensationsspule 14 zu erreichen, sollten deshalb die Eigenschaften der Kompensationsspule 14 an den jeweils gemessenen Weg des Messstößels angepasst werden.

In der in Fig. 2 gezeigten Messschaltung wird dies durch ein Impedanznetzwerk 52 erreicht, das parallel zu der Kompensationsspule 14 geschaltet ist. Dieses Impedanznetzwerk 52 weist mehrere Impedanzelemente auf, die durch von der Auswerte- und Steuereinheit 28 abgegebene Befehle zu- und abschaltbar sind. Auf diese Weise kann die Kompensationsspule 14 in Abhängigkeit vom Weg des Messstößels unterschiedlich bedämpft werden. Wenn der Messstößel 18 tief in die Messspule 12 eintaucht, wird die Bedämpfung der Kompensationsspule 14 verringert oder ganz ausgesetzt, damit eine entsprechend hohe Kompensationsspannung erzeugt wird. Wenn dagegen der Messstößel 18 weiter aus der Messspule 12 herausgezogen ist, so wird die Position des Messstößels von der Auswerte- und Steuereinheit 28 gemessen, und die Bedämpfung der Kompensationsspule 14 wird erhöht, so dass die Kompensationsspannung in dem Maße verringert wird, in dem auch die in der Messspule 12 induzierte Spannung aufgrund der geringeren Feldverzerrung herabgesetzt ist. Auf diese Weise wird in jeder Position des Messstößels 18 eine nahezu vollständige Kompensation der Störspannung erreicht.

Alternativ lässt sich diese Anpassung der Kompensation auch dadurch erreichen, dass die Kompensationsspule 14 an einer oder mehreren Stellen angezapft wird, so dass je nach Position des Messstößels 18 eine größere oder kleinere Anzahl von Windungen der Kompensationsspule kurzgeschlossen werden kann.

Wenn die Messeinrichtung in eine Arretierschraube 38 für ein Kraftfahrzeuggetriebe eingebaut ist, so kann während des Betriebs des Kraftfahrzeugs die Temperatur des Getriebes und damit auch die Temperatur des Messstößels 18 in einem relativ weiten Bereich variieren. Je nach Wahl des ferromagnetischen Materials für den Messstößel 18 ändert sich dabei mehr oder weniger stark auch die Permeabilität dieses Messstößels. Dieser Effekt sollte berücksichtigt werden, wenn in der Auswerte- und Steuereinheit 28 die gemessene Induktivität in einen entsprechenden Weg des Messstößels umgerechnet wird. Da es sich jedoch als schwierig erweist, die Temperatur des Messstößels 18 direkt zu messen, erfolgt bei der hier vorgeschlagenen Messeinrichtung die Temperaturmessung im Bereich der Spulenanordnung 10, die immerhin in der Nähe des Messstößels 18 angeordnet ist.

Wenn jedoch die Arretierschraube 38 in das Getriebegehäuse eingesetzt ist, so wird im allgemeinen die Temperatur des innerhalb des Getriebegehäuses liegenden Endes dieser Arretierschraube größer sein als die Temperatur am äußeren Ende. Folglich wird über die Länge der Arretierschraube 38 ein gewisser Temperaturgradient auftreten, so dass die Temperatur, die innerhalb der Spulenanordnung 10 gemessen wird, nicht identisch mit der Temperatur des Messstößels 18 sein wird. Um dennoch die Temperatur des Messstößels 18 relativ genau bestimmen zu können, wird bei der hier vorgeschlagenen Messeinrichtung die Temperatur innerhalb der Spulenanordnung an zwei Punkten gemessen, die unterschiedlich weit vom Messstößel 18 entfernt sind. Aus den beiden Temperaturwerten lässt sich dann der Gradient berechnen und die Temperatur des Messstößels 18 extrapolieren.

Bei der in Fig. 2 gezeigten Messschaltung 20 wird für die Temperaturmessungen der Umstand ausgenutzt, dass auch der ohmsche Widerstand der Wicklungen der Messspule 12 und der Kompensationsspule 14 temperaturabhängig ist, so dass diese Spulen als Temperatursensoren verwendet werden können. Wie bereits beschrieben wurde, greift die Auswerte- und Steuereinheit 28 die Spannung zwischen dem Widerstand 22 und der Messspule 12 ab und misst auf diese Weise den Sättigungsstrom, der kurz vor dem Öffnen des Schalters 24 durch die Spulenanordnung fließt. Auf diese Weise erhält man einen Wert für die Summe der ohmschen Widerstände der beiden Spulen.

Wie Fig. 2 zeigt, wird außerdem auch die Spannung an einem Punkt zwischen der Messspule 12 und der Kompensationsspule 14 abgegriffen und der Auswerte- und Steuereinheit 28 zugeführt. Damit kann auch der Spannungsabfall über der Kompensationsspule 14 gemessen werden, der, während der konstante Sättigungsstrom fließt, proportional zum ohmschen Widerstand dieser Spule ist. Auf diese Weise erhält man in der Auswerte- und Steuereinheit 28 die aktuellen Werte für die ohmschen Widerstände der beiden Spulen. Daraus lässt sich die Temperatur der jeweiligen Spule berechnen, ebenso der Temperaturgradient und der Extrapolationswert für die Temperatur des Messstößels 18.

Auf der Grundlage dieses Extrapolationswertes wird dann in der Auswerte- und Steuereinheit 28 eine zugehörige Funktion ausgewählt, die den Zusammenhang zwischen der gemessenen Induktivität L und dem Weg S des Messstößels angibt. In der durch Gleichung (1) angegebenen Näherung wird z.B. der Faktor a in Abhängigkeit von der geschätzten Temperatur des Messstößels 18 ausgewählt. Bei der Bestimmung des Extrapolationswertes für die Temperatur des Messstößels 18 kann selbstverständlich auch die aktuelle Position des Messstößels relativ zu der Spulenanordnung 10 berücksichtigt werden sowie ggf. auch die Dauer, während derer sich der Messstößel in der jeweiligen Position befunden hat. So lässt sich beispielsweise auch berücksichtigten, dass sich der Messstößel 18 etwas abkühlen wird, wenn er sich längere Zeit in der Position befindet, in der er am weitesten in die Messspule 12 eintaucht.

Allgemein kann ein mathematisches Modell aufgestellt werden das den Temperaturverlauf innerhalb der Arretierschraube 38 beschreibt. Anhand dieses Modells kann aus den gemessenen Temperaturen der Messspule 12 und der Kompensationsspule 14 berechnet werden, welche Temperatur im Inneren des Getriebegehäuses herrscht und welche Temperatur in der Umgebung außerhalb des Getriebegehäuses herrscht und welches Temperaturprofil sich über die Länge der Arretierschraube 38 einstellen wird, so dass man einen relativ genauen Schätzwert für die Temperatur des Messstößels 18 erhält. Die Parameter dieses mathematischen Modells können für ein gegebenes Getriebe vorab empirisch ermittelt werden.

**Patentansprüche**

1.  Induktive Wegmesseinrichtung mit einer Messspule (12), einem relativ zu der Messspule beweglichen Messstößel (18), einer koaxial zu der Messspule (12) angeordneten und mit dieser in Reihe geschalteten Kompensationsspule (14) zur Kompensation von Störspannungen, die durch externe Magnetfelder in der Messspule (12) induziert werden, und einer Messschaltung (20) zur Messung der vom Weg des Messstößels (18) abhängigen Induktivität der Messspule und der Kompensationsspule, wobei die Kompensationsspule in Abstand zu der Messspule angeordnet ist und weiter von dem Messstößel entfernt ist als die Messspule und eine größere Fläche (A2) umschließt als die Messspule und eine kleinere Windungszahl hat als diese, und wobei die Messschaltung (20) eine elektronische Auswerte- und Steuereinheit (28) zur Berechnung des vom Messstößel (18) zurückgelegten Weges in Abhängigkeit von der gemessenen Induktivität aufweist.

2.  Wegmesseinrichtung nach Anspruch 1, bei der die Messspule (12) und die Kompensationsspule (14) auf einem gemeinsamen Träger (16) angeordnet sind und eine Einheit bilden.

3.  Wegmesseinrichtung nach Anspruch 1 oder 2, bei der die Messspule (12) eng von einer Hülse (34) aus einem Material mit hoher magnetischer Permeabilität umschlossen ist.

4.  Wegmesseinrichtung nach einem der vorstehenden Ansprüche, bei der die Kompensationsspule (14) aus einem Draht gewickelt ist, der einen größeren Querschnitt hat als der Draht, aus dem die Messspule (12) gewickelt ist.

5.  Wegmesseinrichtung nach einem der vorstehenden Ansprüche, bei der die Messspule (12), die Kompensationsspule (14) und die Messschaltung (20) in einem gemeinsamen Gehäuse (48) untergebracht sind.

6.  Wegmesseinrichtung nach einem der vorstehenden Ansprüche, bei der die Auswerte- und Steuereinheit (28) dazu ausgebildet ist, die Beschaltung der Kompensationsspule (14) in Abhängigkeit vom gemessenen Weg des Messstößels (18) zu variieren.

7. Wegmesseinrichtung nach Anspruch 6, bei der parallel zu der Kompensationsspule (14) ein Impedanznetzwerk (52) geschaltet ist, dessen Impedanz durch Befehle der Auswerte- und Steuereinheit (28) veränderbar ist.

8. Wegmesseinrichtung nach einem der Ansprüche 1 bis 7, bei der die Auswerte- und Steuereinheit (28) dazu ausgebildet ist, den ohmschen Widerstand der Messspule (12) und/oder der Kompensationsspule (14) zu messen und daraus einen Wert für die Temperatur der jeweiligen Spule zu berechnen.

9. Wegmesseinrichtung nach Anspruch 8, bei der Auswerte- und Steuereinheit (28) dazu ausgebildet ist, die Temperaturen der Messspule (12) und der Kompensationsspule (14) zu berechnen und anhand der Differenz dieser Temperaturen einen Extrapolationswert für die Temperatur des Messstößels (18) zu berechnen und bei der Berechnung des Weges anhand der gemessenen Induktivität eine Korrektur für die Temperatur des Messstößels (18) vorzunehmen.


**Claims**

1. An inductive path measurement device having a sensor coil (12), a plunger (18) that is movable relative to the sensor coil, and a measurement circuit (20) for measuring the inductance of the sensor coil and the compensation coil as dependent upon the path of the plunger (18), **characterized in that** a compensation coil (14) is arranged coaxially with the sensor coil (12) and connected in series therewith for compensating noise voltages that are induced in the sensor coil (12) by external magnetic fields, the compensation coil (14) is arranged at a distance from the sensor coil and is further apart from the plunger than the sensor coil and encircles a larger area (A2) than the sensor coil and has a smaller number of turns than the latter, and **in that** the measurement circuit (20) comprises an electronic processing and control unit (28) for calculating the path, which the plunger (18) has travelled, as a function of the measured inductance.

2. The path measurement device according to claim 1, wherein the sensor coil (12) and the compensation coil (14) are arranged on a common carrier (16) and form an integrated unit.

3. The path measurement device according to claim 1 or 2, wherein the sensor coil (12) is closely surrounded by a sleeve (34) made of a material that has a high magnetic permeability.

4. The path measurement device according to any of the preceding claims, wherein the compensation coil (14) is wound from a wire that has a larger cross-section than the wire from which the sensor coil (12) wound.

5. The path measurement device according to any of the preceding claims, wherein the sensor coil (12), the compensation coil (14) and the measurement circuit (20) are accommodated in a common casing (48).

6. The path measurement device according to any of the preceding claims, wherein the processing and control unit (28) is configured to change the circuit configuration of the compensation coil (14) in accordance with the measured path of the plunger (18).

7. The path measurement device according to claim 6, wherein an impedance network (52) is connected in parallel with the compensation coil (14), and the impedance network is configured to change its impedance in response to commands from the processing and control unit (28).

8. The path measurement device according to any of the claims 1 to 7, wherein the processing and control unit (28) is configured to measure the ohmic resistance of the sensor coil (12) and/or the compensation coil (14) and to calculate therefrom a value for the temperature of the respective coil.

9. The path measurement device according to claim 8, wherein the processing and control unit (28) is configured to calculate the temperatures of the sensor coil (12) and the compensation coil (14) and to calculate, on the basis of the difference between these temperatures, an extrapolation value for the temperature of the plunger (18) and to apply a correction for the temperature of the plunger (18) when calculating the path on the basis of the measured inductance.

EP 2 492 640 B1

**Revendications**

**1.** Dispositif de mesure de distance inductif comportant une bobine de mesure (12), un piston de mesure (18) mobile par rapport à la bobine de mesure, une bobine de compensation (14) agencée coaxialement à la bobine de mesure (12) et raccordée en série à celle-ci pour compenser des tensions parasites qui sont induites dans la bobine de mesure (12) par des champs magnétiques externes, et un circuit de mesure (20) pour mesurer l'inductance de la bobine de mesure et de la bobine de compensation en fonction de la distance du piston de mesure (18), dans lequel la bobine de compensation est agencée à distance de la bobine de mesure et est plus éloignée du piston de mesure que la bobine de mesure et entoure une plus grande surface (A2) que la bobine de mesure et a un nombre d'enroulements inférieur à celle-ci, et dans lequel le circuit de mesure (20) a une unité électronique d'évaluation et de commande (28) pour calculer la distance parcourue par le piston de mesure (18) en fonction de l'inductance mesurée.

**2.** Dispositif de mesure de distance selon la revendication 1, dans lequel la bobine de mesure (12) et la bobine de compensation (14) sont agencées sur un support commun (16) et forment un ensemble.

**3.** Dispositif de mesure de distance selon la revendication 1 ou 2, dans lequel la bobine de mesure (12) est étroitement entourée par une douille (34) constituée d'un matériau ayant une perméabilité magnétique élevée.

**4.** Dispositif de mesure de distance selon l'une des revendications précédentes, dans lequel la bobine de compensation (14) est enroulée à partir d'un fil qui a une section transversale plus grande que le fil à partir duquel la bobine de mesure (12) est enroulée.

**5.** Dispositif de mesure de distance selon l'une des revendications précédentes, dans lequel la bobine de mesure (12), la bobine de compensation (14) et le circuit de mesure (20) sont reçus dans un boîtier commun (48).

**6.** Dispositif de mesure de distance selon l'une des revendications précédentes, dans lequel l'unité d'évaluation et de commande (28) est conçue pour faire varier le raccordement de la bobine de compensation (14) en fonction de la distance mesurée du piston de mesure (18).

**7.** Dispositif de mesure de distance selon la revendication 6, dans lequel un réseau d'impédance (52) est raccordé en parallèle à la bobine de compensation (14), réseau d'impédance dont l'impédance peut être changée par des commandes de l'unité d'évaluation et de commande (28).

**8.** Dispositif de mesure de distance selon l'une des revendications 1 à 7, dans lequel l'unité d'évaluation et de commande (28) est conçue pour mesurer la résistance ohmique de la bobine de mesure (12) et/ou de la bobine de compensation (14) et pour calculer à partir de celle-ci une valeur de la température de chaque bobine.

**9.** Dispositif de mesure de distance selon la revendication 8, dans lequel l'unité d'évaluation et de commande (28) est conçue pour calculer les températures de la bobine de mesure (12) et de la bobine de compensation (14) et pour calculer une valeur d'extrapolation de la température du piston de mesure (18) au moyen de la différence entre ces températures, et pour effectuer une correction de la température du piston de mesure (18) lors du calcul de la distance au moyen de l'inductance mesurée.

*Fig. 1*

*Fig. 2*

*Fig. 3*

*Fig. 4*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4667158 A
- WO 2010006781 A1
- DE 10320716 A1
- DE 2359873 A1
- DE 102005062906 A1